Europäisches Patentamt

European Patent Office

Office européen des brevets

(19)

(11) EP 0 585 994 B1

(12) EUROPÄISCHE PATENTSCHRIFT

(45) Veröffentlichungstag und Bekanntmachung des Hinweises auf die Patenterteilung:
28.04.1999 Patentblatt 1999/17

(51) Int Cl.6: **H04Q 7/36**, H04B 7/26

(21) Anmeldenummer: 93202280.9

(22) Anmeldetag: 02.08.1993

(54) **Mobilfunksystem mit adaptiver Zuweisung der Funkkanäle**

Mobile radio system with adaptive channel allocation

Système de radio mobile avec allocation dynamique de canaux

(84) Benannte Vertragsstaaten:
DE FR GB IT

(30) Priorität: 04.08.1992 DE 4225688
11.02.1993 DE 4303999

(43) Veröffentlichungstag der Anmeldung:
09.03.1994 Patentblatt 1994/10

(73) Patentinhaber:
• Philips Patentverwaltung GmbH
22335 Hamburg (DE)
Benannte Vertragsstaaten:
DE
• Koninklijke Philips Electronics N.V.
5621 BA Eindhoven (NL)
Benannte Vertragsstaaten:
FR GB IT

(72) Erfinder:
• Duque-Anton, Jesus-Manuel
D-20097 Hamburg (DE)
• Kunz, Dietmar Wilhelm
D-20097 Hamburg (DE)
• Rüber, Bernhard Jakob
D-20097 Hamburg (DE)

(74) Vertreter: Volmer, Georg, Dipl.-Ing. et al
Philips Patentverwaltung GmbH,
Röntgenstrasse 24
22335 Hamburg (DE)

(56) Entgegenhaltungen:
EP-A- 0 431 956          GB-A- 2 234 142

• 36TH IEEE VEHICULAR TECHNOLOGY
CONFERENCE Mai 1986 , DALLAS, US Seiten
279 - 284 CHAPMAN ET AL. 'Cellular
Performance Evaluation Tools and Techniques'

## Beschreibung

Die Erfindung betrifft ein Mobilfunksystem mit Feststationen, bei dem vorgesehen ist, die einer Feststation zugewiesene Auswahl von Funkkanälen durch Auswertung von im Betriebszustand gewonnenen Meßdaten zu ändern. Die Erfindung betrifft auch eine Feststation beziehungsweise eine Auswertevorrichtung für ein solches Funksystem.

Mobilfunksysteme zur Abdeckung eines größeren Versorgungsbereiches werden schon seit längerem als zellulare Funknetze konzipiert. In jeder Zelle eines solchen Funknetzes ist mindestens eine ortsfeste Feststation vorgesehen, die die Funkverbindung zu den in Ihrer Funkzelle befindlichen Mobilstationen aufrecht erhält. Ein solches Funsystem ist beispielsweise das im Aufbau befindliche paneuropäische GSM-System. Eine Übersicht über das GSM-System findet sich beispielsweise in "AN OVERVIEW OF THE GSM-SYSTEM", Bernard J. T. Mallinder, Conference Proceedings, Digital Cellular Radio Conference, October 12-14, 1988, Hagen, Bundesrepublik Deutschland, S. 1a/1 - 1a/13.

Anhand einer vorausgehenden Funknetzplanung wurde beim GSM-System ein Kanalvergabeplan erstellt, der jeder einzelnen Feststation eine Auswahl von Funkkanälen als Funkkanalliste bereitstellt. In sogenannten Operations und Maintenance Centres (OMCs) können die Funkkanallisten der dem jeweiligen OMCs zugeordneten Feststationen mittels eines Computerterminals von einer Bedienperson eingegeben werden. Zum Aufbau und Unterhaltung einer Funkverbindung wird anhand der auf diese Weise jeder Feststation zugeordneten Funkkanalliste ein freier Funkkanal ausgewählt.

Um einen ungestörten Betrieb einer Gesprächsverbindung sicherzustellen, ist im GSM-System ferner ein Ausweichen auf eine andere Frequenz innerhalb einer Zelle (intracell handover) und ein Wechsel in eine andere Zelle (intercell handover) vorgesehen. Zur Beurteilung ihrer Funksituation mißt eine Mobilstion fortlaufend die Signalstärke benachbarter Feststationen und die Signalstärke und die Bitfehlerrate des benutzten Funkkanals. Diese Meßwerte werden über den benutzten Funkkanal an die Feststation gesendet. Mittels der empfangenen Meßwerte wird dann entschieden ob ein Wechsel des Funkkanals beziehungsweise ein Wechsel der Funkzelle erforderlich ist.

Um das für das jeweilige Funksystem verfügbare Frequenzband einer möglichst großen Teilnehmerzahl im gesamten Mobilfunksystem zugänglich zu machen, kommt der Funknetzplanung eine besondere Bedeutung zu.

Bei der Funknetzplanung wird jeder Feststation aus der Gesamtzahl der verfügbaren Funkkanäle eine beschränkte Auswahl von Funkkanälen zugewiesen. In benachbarten Funkzellen werden sich voneinander unterscheidende Funkkanäle benutzt, so daß eine Beeinträchtigung der Funkkanäle untereinander vermieden werden kann. Wegen des beschränkten Frequenzbandes müssen die Funkkanäle im gesamten Funknetz aber so oft wie möglich wiederverwendet werden, um eine möglichst hohe Teilnehmerkapazität zu erzielen.

Der Kanalbedarf einer Feststation, ergibt sich aus der Größe der Funkzelle und dem örtlich zu erwartenden Funkverkehrsaufkommen. Hierbei sind beispielsweise im Bereich einer Großstadt mehr Funkkanäle erforderlich, als in einem rein ländlichen Gebiet. Teilweise werden daher auch schon Funkzellen variabler Größe vorgesehen, die es ermöglichen in sogenannten Kleinzellen bei entsprechend verminderter Sendeleistung eine Wiederbenutzung des Funkkanals in schon geringerem Abstand von der Kleinzelle zu ermöglichen.

Wie weit diese Funkzellen zur Vermeidung einer Funkstörung voneinander entfernt sein müssen, ist von vielen Faktoren abhängig. Diese Faktoren sind beispielsweise die Sendeleistung und die Funkwellenausbreitungsbedingungen, die durch Abschattungen, Streuungen, Reflexionen und Mehrwegeausbreitung auf den Funkübertragungsweg gebildet werden.

Bei der Planung von Funkzellen werden topografische Daten (wie Geländehöhe, Bebauung etc.) mittels statistischer Methoden berücksichtigt.

Aus WO 90/10342 ist eine Methode zur Planung von Funkzellen bekannt, bei der in der Planungsphase mit eigens dafür vorgesehen Meßfahrzeugen Feldstärke- und Interferenzmessungen durchgeführt werden, deren Ergebnisse in einer Datenbank gespeichert werden. Jede Funkzelle bekommt eine Anzahl von Funkkanälen zugewiesen, die dem geschätzten Verkehrsaufkommen entspricht. Auf der Basis der Meßergebnisse wird sodann eine sog. Exklusionmatrix berechnet, welche die Wechselwirkung zwischen den einzelnen Funkzellen wiederspiegelt. In einem iterativen Zuweisungsalgorithmus wird die Funkkanalzuweisung in zufälliger Reihenfolge vergeben. Falls auf diese Weise keine vollständige Kanalzuweisung erfolgen kann, wird ein neuer Versuch in irgend einem der genannten Schritte unternommen.

Auch wenn eine solche Frequenzplanung sehr sorgfältig durchgeführt wird, so kann doch nicht immer ausgeschlossen werden, daß allein auf Grund der Planung, auch wenn diese durch Messungen gestützt sind, eine wirklich optimale Verteilung der Frequenzen im Funknetz gefunden werden kann.

Aus GB-A-2234142 ist daher ein Funkübertragungskommunikationssystem bekannt, bei dem eine Vielzahl von Feststationen Funkverbindungen zu mobilen Stationen herstellen können, wobei jede dieser Feststationen die Fähigkeit besitzt, den Signalpegel von empfangenen, unbenutzten Funkkanälen zu erfassen. Auf Anforderung senden die Feststationen Antwortsignale aus, welche die erfaßten Signalpegel, eine Identifikation der empfangenen, unbenutzten Funkkanäle, eine Identifikation von benutzten Funkkanälen, sofern welche existieren, und eine Identifikation der Feststation enthalten. Ferner ist in einem solchen Funkkommunikationssystem eine Steuerstation vorgesehen, welche ein Anforderungssignal an jede der Feststationen sendet und welche die Antwortsignale der Feststationen empfängt und daraus eine Interferenz-Tabelle aus dem Inhalt der empfangenen Antwortsignale erstellt, wobei die Interferenz-Tabelle Interferenzkoeffizienten zwischen jeweils einem Feststationspaar aufweist. Aus dieser Interferenz-Tabelle erstellt die Steuerstation eine Vielzahl von Interferenz-Schätzwerten für alle möglichen Funkkanalkombinationen und Feststationen und ermittelt ein Minimum für die Interferenz-Schätzung. Die Funkkanäle mit dem jeweils kleinsten Schätzwert werden der jeweiligen Basisstation als Funkkanal zugewiesen. In einer Weiterbildung dieses Mobilfunksystems ist vorgesehen, daß die Interferenz-Koeffizienten dadurch erzeugt werden, daß die gemessenen Signalpegel mit einem Schwellwert verglichen werden, wobei bei Überschreitung des Schwellwertes der Interferenz-Koeffizient um einen bestimmten Inkrementwert erhöht wird.

Bei der Optimierung der Kanallisten wirkt sich hierbei besonders vorteilhaft aus, daß die ausgewerteten Daten, da sie im praktischen Betrieb gewonnen wurden, dem tatsächlichen Netzverhalten besser entsprechen.

Mit der Auswertung, inwieweit sich ein belegter Funkkanal auf einen unbelegten Funkkanal auswirkt, wird hierbei indirekt auf eine Störung des unbelegten Funkkanals geschlossen, falls dieser auch benutzt werden würde. Ab welchem Signalpegel jedoch tatsächlich eine Störung auftritt, ist bei Mobilfunksystemen noch von weiteren Bedingungen abhängig, so daß je nach gewähltem Schwellwert für die in unbelegten Funkkanälen gemessenen Signalpegel einer Feststation Funkkanäle zugewiesen werden, die bei Belegung dennoch gestört werden, bzw. einer Funkstation bestimmte Funkkanäle nicht zugewiesen werden, obwohl bei tatsächlicher Belegung keine spürbare Störung auftreten würde.

Aufgabe der Erfindung ist es, die Zuweisung verfügbarer Funkkanäle besser an die tatsächliche Störsituation anzupassen.

Diese Aufgabe wird dadurch gelöst, daß vorgesehen ist, als Meßdaten die Qualität von benutzten Funkkanälen zu messen und diese Meßdaten dem Belegungszustand von anderen Funkkanälen zuzuordnen.

Durch Auswertung dieser Zuordnungen kann festgestellt werden, ob zwischen der Benutzung von Funkkanälen in anderen Funkzellen und der gemessenen Qualität eines Funkkanals im praktischen Betrieb auch tatsächlich eine Korrelation besteht. Funkkanäle für die keine Korrelation besteht stören einander nicht und können daher in die Funkkanalliste der betreffenden Feststation aufgenommen werden.

Zur Erfassung der Belegungszustände der Funkkanäle an anderen Feststationen muß ein Datenaustausch zwischen den Feststationen der einzelnen Funkzellen vorgesehen sein, der beispielsweise eine Abfrage der Kanalbelegung ermöglicht. Das Ergebnis dieser Abfrage ist dann "Kanal X in Funkzelle Y belegt" bzw. "Kanal X in Funkzelle Y nicht belegt".

Qualitätsdaten und Belegungsdaten werden vorzugsweise paarweise für eine Auswertung gesammelt. Zur Auswertung wird beispielsweise die bedingte Wahrscheinlichkeit für eine ausreichende Qualität eines Funkkanals errechnet werden, unter der Voraussetzung, daß der gleiche Funkkanal bei einer anderen Funkstation belegt bzw. nicht belegt ist.

Um den Berechnungsaufwand in vertretbaren Grenzen zu halten, kann es angeraten sein nur den Belegungszustand unmittelbarer Nachbarkanäle oder im Extremfall nur die Belegung frequenzgleicher Kanäle auszuwerten.

Zur Auswertung von sogenannten kummulativen Störwirkungen ist es vorteilhaft die Qualität eines Funkkanals in Abhängigkeit von der Belegung der Funkkanäle in mehreren anderen Funkzellen zu erfassen. Solche kummulativen Störwirkungen, daß ein Funkkanal zwar noch nicht bei Belegung eines Funkkanals, sondern erst bei gleichzeitiger Belegung von zwei anderen Funkkanälen gestört wird, konnten bisher bei der Planung von Mobilfunksystemen mit den bekannten Methoden nicht erfaßt beziehungsweise berücksichtigt werden.

In einer weiteren Ausführungsform erfolgt eine Abfrage der Kanalqualität immer nur dann, wenn ein neuer Kanal an einer Funkstation belegt wird. Hierzu könnte beispielsweise eine Feststation, die einen Funkkanal neu belegt hat, bei allen Nachbarfeststationen anfragen, ob sich durch die Neubelegung des Kanals die Qualität auf den anderen Kanälen der Nachbarfeststationen geändert hat.

Eine andere Ausführungsform sieht eine Abfrage des Belegungszustandes immer dann vor, wenn sich die Qualität eines Kanals an einer Feststation wesentlich geändert hat. Sobald eine Feststation eine signifikante Qualitätsverschlechterung auf einem Funkkanal bemerkt hat, werden alle Nachbarfunkstationen abgefragt, ob sie gerade ihre Kanalbelegung geändert haben.

Die beiden zuletzt genannten Ausführungsformen haben den Vorteil, daß die auszuwertende Datenmenge auf diese Weise erheblich reduziert werden kann, da im Gegensatz zu einer in regelmäßig wiederkehrenden Zeitabschnitten stattfindenen Abfrage von Daten hier eine Datenabfrage beziehungsweise ein Datenaustausch nur bei jeder Änderung des Funknetzes vorgenommen wird.

Bei einer besonderen Ausgestaltung der Erfindung ist vorgesehen, daß eine Feststation anstelle eines ihrer zugeordneten Funkkanäle einen ihr nicht zugeordneten Funkkanal benutzt und die sich dadurch an dieser Feststation und an benachbarten Feststationen einstellenden Änderungen der Qualitäten von Funkkanälen derart ausgewertet werden, daß bei einer Verbesserung der Qualitäten eine Änderung der Zuweisung auf den probeweise benutzten Funkkanal vorgenommen wird.

Durch probeweise Verwendung eines unbenutzten Kanals sind die im Funknetz beobachteten Auswirkungen unmittelbar auf die Verwendung dieses Kanals zurückzuführen, was die Auswertung zur Umbildung der Kanallisten erheblich vereinfacht.

Soweit sichergestellt ist, daß zeitgleiche probeweise Verwendungen von Funkkanälen auf örtliche Bereiche der Funknetze beschränkt sind, die sich einander nicht beeinflußen zu vermögen, können auf diese Weise die Umbildungen der Kanallisten unabhängig voneinander in örtlich begrenzten Gebieten des Funknetzes erfolgen. Damit ist es in vorteilhafter Weise möglich, auf lokal bedingte Änderungen der Funksituation auch nur lokal begrenzt zu reagieren.

Vorteilhaft ist hierbei auch, daß es dem Funknetzbetreiber freigestellt wird, nur bestimmte Teile des Funknetzes, beispielsweise solche Teile mit hohem Verkehrsaufkommen, mit einer solchen Auswertevorrichtung zu versehen, beziehungsweise nachzurüsten.

Im Gegensatz zur ersten Ausführungsform, in der alle Daten des gesamten Funknetzes gesammelt und für das gesamte Funknetz zusammen ausgewertet werden, ist bei dieser Ausführungsform die zu sammelnde Datenmenge begrenzt. Zur Auswertung der gesammelten Daten wird so auch weit weniger Rechen- und Speicherkapazität benötigt als bei einer zentralen Auswertung des gesamten Funknetzes.

In einer Weiterbildung dieser Ausführungsform ist vorgesehen, daß in Fällen, in denen durch die probeweise Verwendung eines Funkkanals eine Verschlechterung der ermittelten Qualitäten eintritt, in geringeren Maße trotzdem die Änderung der Zuweisung auf den probeweise benutzten Funkkanal vorzunehmen.

Hierdurch wird es dem Funknetz ermöglicht aus einer stabilen Lage, die möglicherweise aber nur ein Suboptimum sein könnte, auszubrechen.

In einer Ausbildung dieses Ausführungsbeispiels ist eine Gewichtung der ermittelten Qualitäten derart vorgesehen, daß eine Änderung der Zuweisung eines probeweise benutzten Funkkanals bei Verschlechterung der Qualitäten zunehmend unwahrscheinlicher wird.

Durch diese Maßnahme kann das Betriebsverhalten der Optimierung verbessert werden.

In einer Weiterbildung dieser Ausführungsform ist ein Ausgleich der Gewichtungen zwischen benachbarten Feststationen vorgesehen.

Auf diese Weise führt beispielsweise eine in einer Funkzelle vorgenommene Erhöhung der Gewichtung auch zu einer Erhöhung der Gewichtungen der benachbarten Funkzellen. Dadurch wird auch eine erhöhte Anpassungsfreudigkeit der von einer Änderung einer Funksituation mittelbar betroffenen Nachbarstation erzwungen und so die lokale Anpassungsfreudigkeit an geänderte Funksituation erhöht. Auf diese Weise wird eine schnelle und dennoch lokal begrenzte Reaktion zu ermöglicht.

Zur Ausführung der Erfindung ist im Mobilfunksystem eine oder bei verteilter Auswertung auch mehrere Steuervorrichtungen mit Mittel vorzusehen, mit denen Daten von Feststationen gesammelt werden, ein Kanalvergabeplan erstellt werden kann und die neuen Kanalvergabepläne an Feststationen weitergeleitet werden können.

In einer weiteren Ausführungsform sind Mittel zur Speicherung vorgesehen, in welchen jeweils die zu einer Feststation als störende Feststationen in Frage kommenden Feststationen speicherbar sind.

Auf diese Weise werden zur Berechnung einer neuen Kanalliste nur noch diejenigen Feststationen berücksichtigt, die auch tatsächlich als Störer in Betracht kommen. Hierdurch kann der Aufwand zur Berechnung einer neuen Kanalliste erheblich reduziert werden.

In Mobilfunknetzen ist einer oder auch mehreren Feststationen jeweils eine Steuervorrichtung zugeordnet, die Mittel zur Speicherung einer Kanalliste enthält. Aus dieser Kanalliste wird jeweils ein für eine Funkverbindung benötigter Funkkanal ausgewählt. Ferner sind Mittel zur Erfassung der Funkkanalbelegungen vorgesehen.

Zur Ausführung der Erfindung sind in den Steuervorrichtungen der Feststationen Mittel vorzusehen mit denen die erfaßten Daten der aktuellen Funkkanalbelegung weitergeleitet werden können, Daten betreffend einer Kanalliste empfangen werden können und anhand der empfangenen Daten die Funkkanalliste geändert werden kann.

Die Erfindung wird nun anhand von zwei Ausführungsbeispielen und den Zeichnungen näher beschrieben und erläutert.

Es zeigen:

Fig. 1     Ein Funksystem mit Feststationen und einer zentralen Auswerteeinrichtung.

Fig. 2     Ein Funksystem mit Feststationen und Auswerteeinrichtungen für eine lokal begrenzte Kanalvergabe.

Fig. 3     Eine Auswertevorrichtung und eine Feststation in Blockbilddarstellung für ein erfindungsgemäßes Funksystem

Fig. 4     Einen Programmablaufplan für eine der Feststation beigeordneten Auswertevorrichtung zur Erfassung und Ordnung von Gesprächsqualitäten

Fig. 5    Einen Programmablaufplan für eine Auswertung der Gesprächsqualitäten

Fig. 6    Einen Programmablaufplan für ein zweites Ausführungsbeispiel

In vorteilhafter Weise läßt sich das beanspruchte Mobilfunksystem auch in bereits bestehende Mobilfunksysteme integrieren. Ein solches bestehendes Mobilfunksystem ist beispielsweise das eingangs genannte, im Aufbau befindliche Digitale Paneuropäische Mobilfunksystem GSM.

Beispielhaft wird anhand dieses GSM-Systems die Integration der Erfindung in dieses bekannte Mobilfunksystem beschrieben.

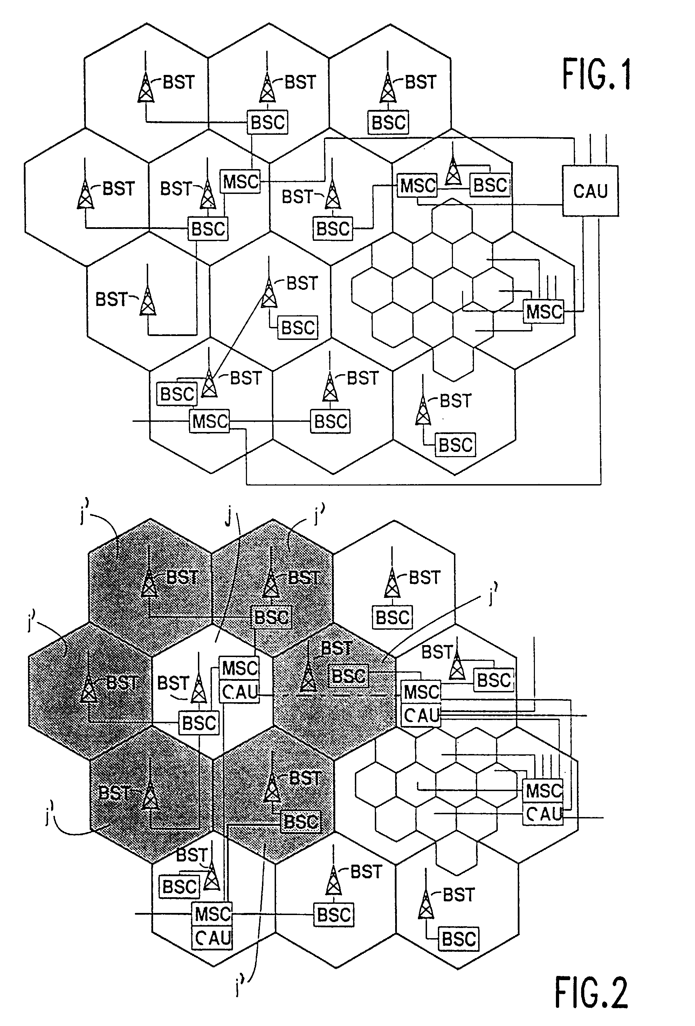

Beim GSM-System ist jeder Funkzelle eine Sende-/Empfangsstation BST (base station transceiver) zugeordnet. Fig. 1 zeigt ein solches Funknetz mit Funkzellen unterschiedlichen Durchmessers. Eine oder auch mehrere Sende-/Empfangsstationen werden von einer Steuereinrichtung BSC (base station controller) gesteuert. Die Steuereinrichtungen BSC sind über Datenleitungen wiederum mit Funkvermittlungszentralen MSC (mobile switching center) verbunden. In diesen Funkvermittlungszentralen erfolgt die Überleitung der Gespräche in das öffentliche drahtgebundene Telekommunikationsnetz.

Zur Kontrolle und Überwachung anderer Netzeinheiten, wie zum Beispiel von Funkvermittlungszentralen, sind im GSM-Netz sogenannte Operations und Maintenance Centre (OMCs) vorgesehen. Das OMC ist über ein X.25 Paketvermittlungsnetz mit den anderen Netzeinheiten verbunden. Mittels eines Computerterminals können Konfigurationsdateien der angeschlossenen Netzeinheiten, also auch die Funkkanallisten vom oder zum OMC übertragen werden. Manuell im OMC vorgenommene Änderungen der Funkkanallisten werden auf diese Weise in den einzelnen MSC auf den neuesten Stand gebracht.

Beim GSM-System werden Gesprächskanäle, welche digital codierte Gesprächsdaten enthalten und verschiedene Logische Kanäle, die zu Signalisierungszwecken benötigt werden, durch ein Zeitmultiplexverfahren in physikalischen Kanälen zusammengefaßt. Es existieren jedoch auch physikalische Kanäle, wie beispielsweise der sogenannte BCCH (broadcast channel), die ausschließlich für Signalisierungszwecke vorgesehen sind.

Auf dem BCCH sendet jede Feststation verschiedene Systeminformationen. Der BCCH wird ausschließlich in Richtung von der Feststation zu der Mobilstation, im sogenannten downlink, benötigt. Mittels der auf dem BCCH ausgesandten Systeminformationen wird jede Mobilstation, die sich innerhalb der Funkzelle der betreffenden Feststation befindet, in die Lage versetzt, Verbindung zu der ihr zugeordneten Feststation aufzunehmen. So enthalten die Systeminformationen des BCCH beispielsweise die Frequenz eines nur in Richtung von Mobilstation zu Feststation, dem sogenannten uplink, vorgesehenen Kontrollkanals RACH (random access channel) auf dem eine Mobilstation einen Kanal anfordern kann, der ihr dann zur ausschließlichen Benutzung bidirektional zur Verfügung steht. Der angeforderte Kanal wird aus einer in der Feststation abgespeicherten Funkkanalliste entnommen und in einer sogenannten immediate assignement message der Mobilstation über den CCCH (common control channel) mitgeteilt. Üblicherweise wird der zugewiesenen Kanal zunächst als SDCCH (stand alone dedicated control channel) in beiden Richtungen ausschließlich zum Datenaustausch benutzt. Kommt eine Gesprächsverbindung zu Stande so wird der ausgewählte Kanal im Zeitmultiplexbetrieb als Gesprächskanal TCH (traffic channel) und zur Signalisierung während einer laufenden Gesprächsverbindung als SACCH (slow associated control channel) benutzt.

Um einen ungestörten Betrieb einer Gesprächsverbindung sicherzustellen, ist im GSM-System ein Ausweichen auf eine andere Frequenz innerhalb einer Zelle (intracell handover) und ein Wechsel in eine andere Zelle (intercell handover) vorgesehen. Zur Beurteilung ihrer Funksituation sendet eine Mobilstation auf dem SACCH fortlaufend measurement reports, die Meßdaten über die eigene Zelle und über benachbarte Zellen enthalten.

Hierzu werden auf dem SACCH einer jeden Mobilstation die Frequenzen der BCCHs der benachbarten Feststationen mitgeteilt. Der Zeitmultiplexrahmen des GSM-Systems ist so aufgebaut, daß er auch Zeitschlitze enthält, die weder von einem Verkehrskanal noch von einem Kontrollkanal belegt sind. In diesen Zeitschlitzen wird der Empfänger der Mobilstation auf die BCCHs der benachbarten Feststationen abgestimmt und mißt deren Signalstärke. Im Gegensatz zu den Gesprächskanälen, deren Sendeleistung immer gerade so groß gewählt wird, daß eine ausreichende Verbindungsqualität garantiert ist, werden die BCCH's stets mit maximaler Sendeleistung ausgestrahlt. Auf diese Weise ist zunächst einmal gewährleistet, daß unabhängig vom jeweiligen Aufenthaltsort in einer Funkzelle, jede Mobilstation den BCCH in ausreichender Signalstärke empfangen kann. In der Regel ist auf diese Weise darüberhinaus aber auch gewährleistet, daß der BCCH auch in benachbarten Funkzellen noch angemessen werden kann.

Die gemessenen Signalstärken werden im SACCH zur Feststation übertragen. Desweiteren wird im GSM-System von jeder Mobilstation die Signalstärke und die Bit-fehlerrate des ausgewählten Kanals gemessen und ebenfalls zur Feststation über den SACCH gesendet.

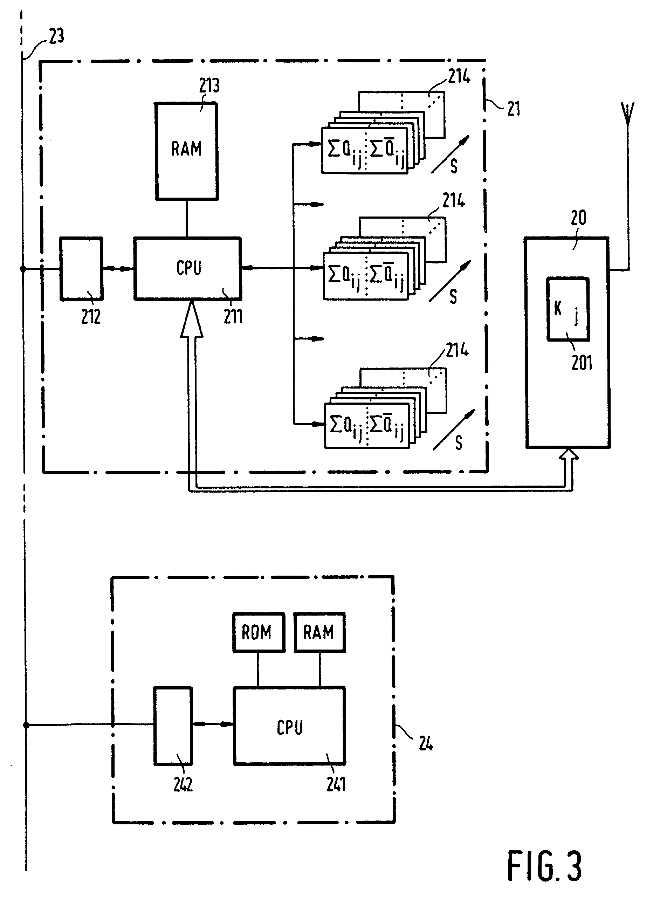

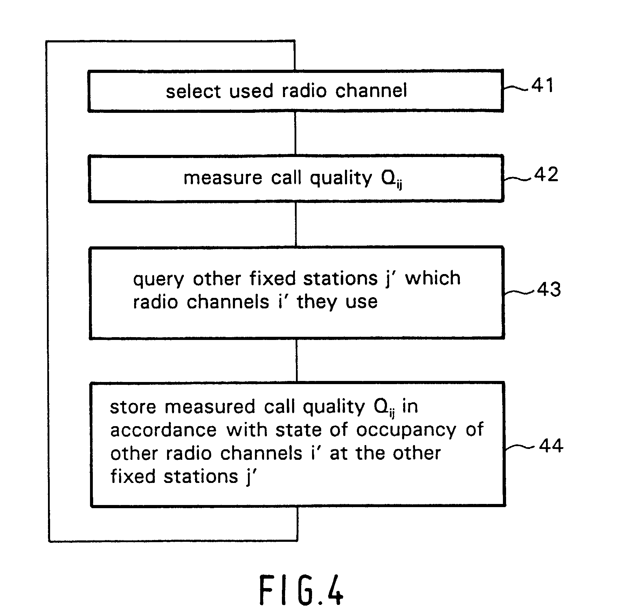

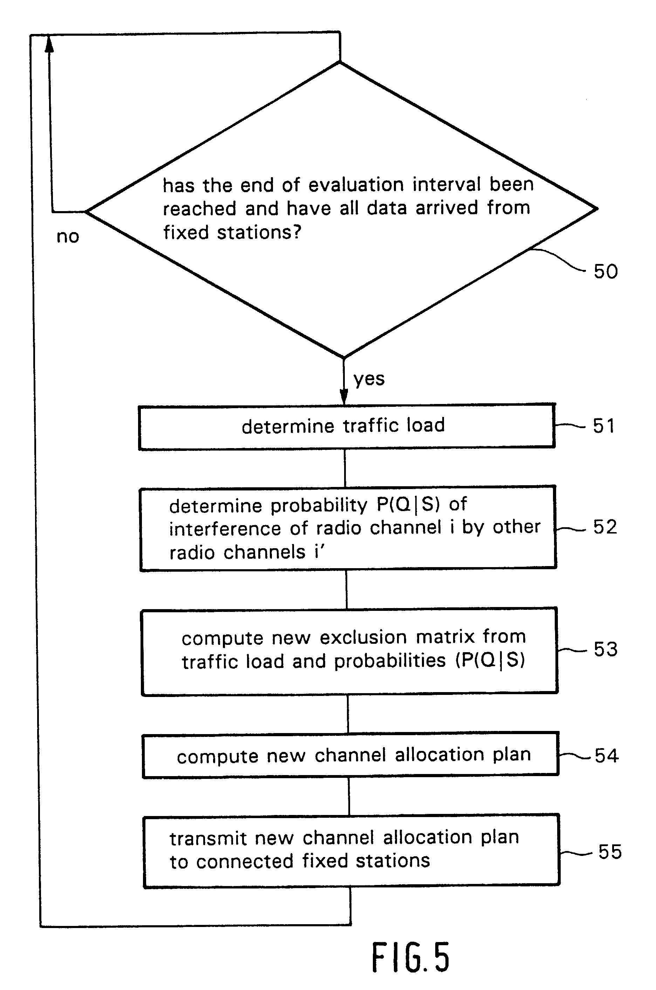

Bei dem im folgenden beschriebenen ersten Ausführungsbeispiel zeigt Fig. 3 in Blockbilddarstellung die Hardwarekomponenten und die Figuren 4 und 5 die auszuführenden Verarbeitungsschritte in einem entsprechend der Erfindung ausgestalteten Mobilfunksystem. Von Feststationen 20 empfangene Meßwerte werden zunächst in den jeweiligen Feststationen beigeordneten Auswerteeinrichtungen 21 gesammelt und geordnet. Hierzu sammelt jede Auswerteeinrichtung 21 Daten über das aktuelle Verkehrsaufkommen in einer Zelle und Daten über die Gesprächsqualität $q_{ij}$ eines jeden Funkkanals i an einer jeweiligen Feststation j in Abhängigkeit von der aktuellen Funksituation S, das heißt in Abhängigkeit davon, ob der gleiche Funkkanal i, beziehungsweise ein zum Funkkanal i benachbarter Funkkanal i' in einer anderen Funkzelle j' gerade benutzt wird. Figur 2 zeigt eine Funkzelle j und die zu der Funkzelle j benachbarten Funkzellen j'. Zur Bestimmung der jeweils aktuellen Funksituation S sendet die der jeweiligen Feststation 20 beigeordnete Auswertevorrichtung 21 über eine Datenleitung 23 gleichzeitig mit der Messung der Gesprächsqualität $q_{ij}$ eine Anfrage an die anderen Feststationen j', welchen der Kanäle i' diese gerade benutzen (43).

Bei der Vielzahl von aktiven Funkverbindungen würde sich auf diese Weise ein enormer Datenverkehr zwischen den Feststationen ergeben. Das Ausführungsbeispiel sieht daher vor, daß jeweils zu einem Zeitpunkt an jeder Feststation immer nur ein Funkkanal i, beispielsweise durch einen Zufallsgenerator ausgewählt (41) und dessen Gesprächsqualität gemessen wird (42). Über einen längeren Auswertungszeitraum hinweg, ergeben sich so trotzdem genügend Daten für eine statistisch gesicherte Auswertung.

Die jeder Feststation 20 beigeordnete Auswertevorrichtung 21 besteht im wesentlichen aus einem Mikrorechner 211 mit entsprechender Programmierung. Zur Speicherung der gemessenen Gesprächsqualität $q_{ij}$ entsprechend der jeweils zum Meßzeitpunkt vorgefundenen Funksituation S, das heißt je nachdem welche Funkkanäle i' von den anderen Feststationen j' als benutzt beziehungsweise unbenutzt zurückgemeldet wurden, ist in jeder Feststation j für jeden Funkkanal'i ein eigener Speicherbereich 214 vorgesehen. Die Funksituation S kann als Vektor angesehen werden, dessen Elemente aus Binärwerten bestehen. Der Binärwert "1" kennzeichnet den Belegungszustand eines Funkkanals i' an einer anderen Feststationen j' jeweils als belegt, ein Binärwert "0" jeweils als nicht belegt wiedergeben. Durch gewichtete Addition der Vektorelemente; das erste Vektorelement wird mit $2^0$, das zweite Vektorelement mit $2^1$, das dritte Vektorelement mit $2^2$ und so weiter multipliziert, erhält man für jeden Vektor eine eindeutige Speicheradresse.

Zur Datenverdichtung wird vor der Speicherung (44) eine Klassifikation der beobachteten Gesprächsqualitäten in "Qualität ausreichend" $Q_{ij}$ beziehungsweise in "Qualität nicht ausreichend" $\overline{Q}_{ij}$ vorgenommen. Auf diese Weise wird für jede Kombination eines an der betreffenden Feststation j zur Messung ausgewählten Funkkanals i und den von den anderen Feststationen j' als benutzt zurückgemeldeten Funkkanälen i' nur zwei Speicherplätze benötigt. Der eine Speicherplatz enthält die Anzahl $\Sigma\, Q_{ij}$ der Gespräche mit ausreichender Qualität und der andere Speicherplatz die Anzahl $\Sigma\, \overline{Q}_{ij}$ der Gespräche mit nicht ausreichender Qualität.

Am Ende eines Auswertungszeitraums leiten die Feststationen die empfangenen Meßwerte über Datenleitungen an eine zentrale Auswerteeinrichtung weiter. Vorzugsweise ist diese zentrale Auswerteeinrichtung einem OMC zugeordnet, da auf diese Weise die bereits für das OMC vorhandenen Datenübertragungseinrichtungen mitbenutzt werden können. Aufgrund ihrer Funktion wird diese zentrale Auswerteeinrichtung im folgenden auch als Kanalvergabe-Steuereinrichtung CAU (= channel allocution unit) bezeichnet. In der zentralen Auswertevorrichtung 24 werden aus dem ermittelten Kanalbedarf und den ausgewerteten Gesprächsqualitäten für jede Feststation neue Kanallisten $K_j$ berechnet.

Die zentrale Auswertevorrichtung 24 besteht ebenfalls aus einem programmgesteuerten Mikrorechner 241 und einer Schnittstelle 242 zu den, den Feststationen beigeordneten Auswertevorrichtungen. Aus den gesammelten Daten über das jeweilige Verkehrsaufkommen einer Auswertungsperiode wird in der zentralen Auswertevorrichtung 24 zunächst der aktuelle Kanalbedarf ermittelt (51). Zur Errechnung einer aktuellen Exklusionsmatrix wird im Ausführungsbeispiels aus den gesammelten Meßwerten die aktuelle Interferenz-Relation anhand der Betrachtung der bedingten Wahrscheinlichkeit, ob ein bestimmter Funkkanal i durch einen anderen Funkkanal i' gestört wurde, bestimmt (52).

Zunächst wird hierzu zu einer vorgegebenen Funkstation j die Menge aller Interferierer I(j) bestimmt. Um die Darstellung übersichtlicher zu gestalten, wird bei dieser Ausführungsform die Störwirkung jeweils nur einer Feststation j' berücksichtigt. Eine andere Feststation j' gehört dann zur Menge der Interferierer I(j), wenn folgende Relation der bedingten Wahrscheinlichkeiten P gegeben ist:

$$P\,(\overline{Q}_{ij}\ |\ j'\ \text{benutzt}\ i) > P\,(\overline{Q}_{ij}\ |\ j'\ \text{benutzt nicht}\ i)$$

Die bedingte Wahrscheinlichkeit $P\,(\overline{Q}_{ij})$ für eine bestimmte Belegung S des Funkkanals i an einer anderen Feststation j' ergibt sich aus dem Verhältnis der Anzahl der nicht ausreichenden Gesprächsqualitäten zu der Gesamtzahl der jeweils betrachteten Gesprächsqualitäten (= Summe der nicht ausreichenden und der ausreichenden Gesprächsqualitäten einer jeweils erfaßten Funksituation S):

$$P(\overline{Q}_{ij} \mid S) = \frac{\Sigma \overline{Q}_{ij}(S)}{\Sigma Q_{ij}(S) + \Sigma \overline{Q}_{ij}(S)}$$

Zur Reduzierung der zu verarbeitenden Daten ist es vorteilhaft, beispielsweise durch Vergleich mit einem Schwellwert zu entscheiden, ob die Störung durch eine andere Feststation j' signifikant oder aber vernachlässigbar ist. Mit den aus dem Bereich der Kanalplanung bekannten Methoden, wie beispielsweise mit der eingangs erwähnten Methode, läßt sich aus den derart verdichteten Daten eine Exklusionmatrix berechnen (53). Aus Kanalbedarf und Exklusionsmatrix wird schließlich mit ebenfalls aus der Funknetzplanung bekannten Methoden ein neuer Kanalvergabeplan berechnet (54).

Der neu ermittelte Kanalvergabeplan umfaßt für jede Feststation eine neue Kanalliste $K_j$, die von nun ab von den jeweiligen Feststationen anstelle der alten Kanallisten benutzt werden sollen. Die bereits vorstehend angesprochenen Schnittstellen umfassen bei diesem Ausführungsbeispiel ferner eine Schnittstelle zwischen OMC und der erfindungsgemäßen Kanalvergabe-Steuereinrichtung, über welche die neuen Kanallisten an das OMC selbständig übergeben werden können. Das OMC ist bei der Erfindung so ausgeführt, daß übergebene Kanallisten automatisch eine Weitergabe dieser Kanallisten über die Datenleitungen an die Steuervorrichtungen der Feststationen auslösen.

Auf diese Weise werden aus den Netzreaktionen ständig neue Kanallisten erzeugt. Hierdurch wird es ermöglicht, daß sich das Funknetz selbständig optimiert bzw. selbständig an Änderungen im Funknetz anpaßt.

Eine flexiblere Kanalvergabe kann durch diskrete Optimierungsverfahren erhalten werden, die es erlauben den Interferenzgrad zu berücksichtigen. Hierzu wird für jede störende Funkstation j' $\in$ I (j) der Grad der Interferenz ermittelt. Hierzu muß insbesondere die Störwirkung aller anderen Interferierer (j'' $\in$ I (j); j'' $\neq$ j') herausgefiltert werden. Ein adäquates Mittel hierzu sind die betrachteten bedingten Wahrscheinlichkeiten. Der gesuchte Interferenz-Grad ergibt sich bei der Berücksichtigung nur jeweils einer einzigen Feststation wie folgt:

$$P \text{ (j wird von j' gestört)} =$$

$$1 - \frac{P (Q_{ij} \mid \text{j' benutzt i; alle j'' benutzen nicht i)}}{P (Q_{ij} \mid \text{j' benutzt nicht i; alle j'' benutzen nicht i)}}$$

wobei $Q_{ij}$ für Qualität ausreichend steht.

Da im allgemeinen bei zellularen Funknetzen die Sendeleistung einer Feststation so gewählt ist, daß eine ausreichende Versorgung innerhalb der Funkzelle gewährleistet ist, eine Störung weiter entfernter Funkzellen aber vermieden wird, wird es in den meisten Fällen ausreichend sein, nur die unmittelbar benachbarten Feststationen als Störer in Betracht zu ziehen. Die Außerachtlassung weiter entfernter Feststationen verringert wiederum erheblich den Berechnungsaufwand.

Die beschriebene Ausführungsform bezog sich zunächst auf die Untersuchung von Gleichkanalstörungen. Fortbildungen der Ausführungsform ergeben sich durch Betrachtungen der Gesprächsqualität eines Funkkanals i unter der Voraussetzung daß andere Funkkanäle i' (i' $\neq$ i) benutzt beziehungsweise nicht benutzt sind. Hierdurch sind auch Nachbarkanalstörungen erfaßbar.

Das nachfolgend beschriebene zweite Ausführungsbeispiel ermöglicht einen lokal begrenzten Anpassungsprozeß der Kanallisten. Eine örtlich begrenzte Änderung der Ausbreitungsverhältnisse führt zu einer örtlich beschränkten Netzreaktion. Hierzu sind jeder Feststation j Speichermittel zugeordnet, welche eine Aufstellung $S_j$ aller Feststationen enthalten, die als potentielle Störer in Betracht kommen. Diese Liste besagt nicht, daß es sich um tatsächlich störende Feststationen handelt, sondern nur, daB eine Störung durch diese Feststationen nicht sicher ausgeschlossen werden kann. Von Überreichweiten abgesehen, die rein zufällig auftreten, kommen als störende Feststationen $S_j$ nur solche in Betracht, die sich in Abhängigkeit von Ihrer Sendeleistung innerhalb eines bestimmten Abstands von der jeweils betrachteten Feststation j befinden. Wegen dieser räumlichen Verbundenheit zwischen betrachteter Feststation und der in Frage kommenden störenden Feststationen werden diese Feststationen im folgenden als Nachbarstationen $S_j$ bezeichnet.

Die Liste dieser Nachbarstationen kann beispielsweise auch in der Planungsphase erstellt werden, wobei durch Berücksichtigung der topographischen und morphologischen Daten eine Begrenzung der Nachbarstationen möglich ist.

Zur Ausführung der Erfindung sind die betrachtete Feststation j und deren Nachbarstationen $S_j$ derart miteinander gekoppelt, daß ein Austausch von bestimmten Daten, die noch im einzelnen beschrieben werden, zwischen diesen Feststationen und einer Steuervorrichtung zur Berechnung neuer Kanallisten möglich ist. Für das Wesen der Erfindung ist die Struktur der Koppelung der Feststationen ohne Belang. So kann beispielsweise eine sternförmige Koppelung vorgesehen sein, die eine zentrale Auswertung dieser Daten ermöglicht als auch eine Anordnung, bei der die Auswertung auf die Nachbarstationen verteilt ist. Der Einfachheit halber wird, wie in Figur 2 auszugsweise dargestellt, von einer zentralen Kanalvergabe-Steuereinrichtung CAU (Channel Allocation Unit) ausgegangen, welche mit den Funkvermittlungszentralen MSC derjenigen Feststationen verbunden sind, die als Nachbarstationen $S_j$ vorgesehen sind.

In jeder Feststation j ist vorgesehen die Verfügbarkeit $q_{ji}$ eines Funkkanals i zu schätzen, wobei beispielsweise der Zahlenwert 0 ständige Störung, und der Zahlenwert 1 volle Verfügbarkeit bedeutet. Die Verfügbarkeit ist ein Schätzwert für die Wahrscheinlichkeit, daß die Störungen eines bestimmten Funkkanals i so gering bleiben, daß während eines Gespräches eine Umschaltung auf einen anderen Kanal voraussichtlich nicht erforderlich sein wird. Nicht zu beachten sind hierbei alle Funkkanalwechsel aufgrund eines Funkzellenwechsels. Diese Funkkanalwechsel sind ja nur dadurch bedingt, daß sich eine Mobilstation von einer Funkzelle zu einer anderen bewegt hat und haben somit keinen Einfluß auf die Betrachtung der Interferenzsituation.

Die Verfügbarkeit eines Kanals läßt sich beispielsweise anhand einer empirisch ermittelten Tabelle, in welcher Empfangsfeldstärke und Bit-Fehlerrate als Parameter verwendet werden, bestimmen. So sind beispielsweise im GSM-System Grenzen für Bitfehlerrate und Signalstärke vorgegeben, deren überschreitung eine Funkkanalwechsel innerhalb einer Funkzelle auslösen. Für alle Tabellenwerte, die diese Grenzwerte überschreiten ist beispielsweise der Schätzwert für die Verfügbarkeit gleich dem Zahlenwert Null anzusetzen.

Ist ein zu untersuchender Kanal zu einem Zeitpunkt nicht belegt, so kann zur Schätzung der Verfügbarkeit ersatzweise die empfangene Signalstärke allein herangezogen werden.

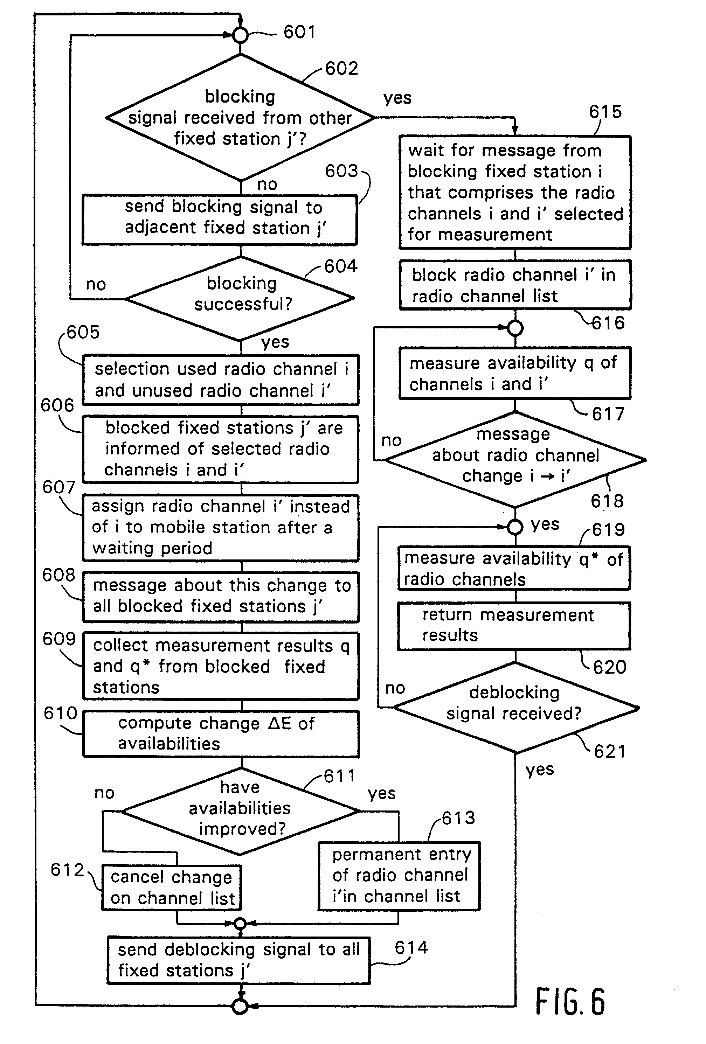

Im folgenden wird anhand der Figur 6 ein Prozeß beschrieben, mittels welchem eine Feststation j ihre Kanalliste $K_j$ auf lokaler Grundlage erlernen bzw. optimieren kann.

Vorzugsweise sollte die Verfügbarkeit $q_{ji}$ über einen Zeitraum gemessen werden, von dem ausgegangen werden kann, daß sich keine der Randbedingungen ändert. Die Messung der Verfügbarkeit $q_{ji}$ müßte folglicherweise von Neuem begingen, wenn an einer Nachbarstation j' deren Kanalliste $K_{j'}$ geändert worden ist.

Um solche Konflikte zu vermeiden, die dann auftreten können, wenn sich Prozesse in Nachbarstationen zufällig zeitlich überschneiden, sieht die Erfindung vor, daß nach Ablauf einer Wartezeit, zu Beginn des Prozesses (601) an jede Nachbarstation ein Blockierungssignal gesendet wird (603). Bei Empfang eines Blockierungssignals hält die betreffende Feststation ihre Wartezeit an. Auf diese Weise wird verhindert, daß solange eine Blockierung nicht aufgehoben ist, eine der Nachbarstationen $S_j$ selbst einen Prozeß starten kann.

Durch geeignete Maßnahmen muß ferner sichergestellt werden, daß bei nahezu gleichzeitig gesendeten Blockierungssignalen nur eine der Nachbarstationen ihren Prozeß startet. Dies kann beispielsweise dadurch erreicht werden, daß jede Feststation die ein Blockierungssignal gesendet hat, bevor sie ihren Prozeß fortsetzt eine Zeitspanne verstreichen läßt, innerhalb derer Blockierungssignale, die von Nachbarstationen $S_j$ vor Empfang des Blockierungssignals der Feststation j gesendet wurden, auch bei der Feststation j eingetroffen sein müßten. Hat eine Feststation auf diese Weise einen Konflikt der Blockierungssignale entdeckt, hebt es durch ein Entblockierungssignal ihr gesendetes Blockierungssignal wieder auf und startet die Wartezeit neu. Da dies alle, am Konflikt der Blockierungssignale beteiligten Feststationen gleichermaßen vollziehen, wird der Blockierungskonflikt auf diese Weise behoben. Durch eine statistisch vorzugsweise exponentiell verteilte Wartezeit wird sich im nächsten, oder in einer der nächsten Blockierungsversuch(e) ein konfliktfreier Zustand einfinden.

Nach erfolgreicher Blockierung (604) der Nachbarstationen $S_j$ wählt die Feststation j einen zur Zeit von ihr benutzten Kanal i und einen zur Zeit von ihr unbenutzten Kanal i' aus (605). Diese Auswahl kann zufällig erfolgen, oder auch unter Berücksichtigung, welcher benutzte Kanal i die schlechteste Verfügbarkeit aufweist und welcher unbenutzte Kanal i' nur ein geringes Störsignal an der Feststation (= Messung des Uplink-Kanals) aufweist.

Die Messung des Störsignals im Uplink kann grundsätzlich mit den in einer Feststation für den Funkverkehr vorgesehenen Empfängern vorgenommen werden. Zur Messung des Störsignals im Uplink ist es jedoch vorteilhaft, an jeder Feststation eine zusätzliche, umstimmbare Empfangseinheit vorzusehen, welche alle unbenutzten Kanäle durchsucht und jeweils denjenigen Kanal i' mit dem geringsten Störsignal heraussucht. Dies reduziert die Kosten, da ein Empfänger zur Störsignalmessung preiswerter ist als eine zusätzliche, komplette, für Mobilfunk vorgesehene Empfängereinheit, die nur für Meßzwecke genutzt wird.

Über die Datenaustauschleitungen werden allen Nachbarstationen j', die für den Prozeß ausgewählten Kanäle i und i' mitgeteilt (606). Jede Nachbarstation j', die die Kanäle i oder Nachbarkanäle i-n,...i-1, i+1,...i+n von i bzw. Nachbarkanäle i'-n, i'-1, i'+1, i'+n des bisher an der Feststation j unbenutzten Kanals i' benutzt, mißt zunächst die Verfügbarkeiten $q_{j'i}$ des Kanals i und seiner Nachbarkanäle an der Feststation j' und die Verfügbarkeit $q_{j'i'}$ des Kanals i' und seiner Nachbarkanäle an der Feststation j'(617). Daraufhin verwendet die Feststation j fortan zur Übertragung des auf dem Funkkanal i laufenden Gesprächs probeweise den bisher unbenutzten Funkkanal i' (607) und teilt diese Änderung den anderen Feststationen mit (608). Alle Nachbarstationen, die vor der Umschaltung auf den unbenutzten Kanal i' eine Messung der Verfügbarkeit vorgenommen haben, messen nun wiederum die Verfügbarkeit $q^*_{j'i}$ des bisher benutzten Funkkanals i und seiner Nachbarkanäle an einer Nachbarstation j' und die Verfügbarkeit $q^*_{j'i'}$ des probeweise belegten Funkkanals i' und seiner Nachbarkanäle an der Feststation j'(619). Die gemessenen Verfügbarkeiten werden von den Nachbarstationen zur zentralen Kanalvergabe-Steuereinrichtung CAU der jeweiligen Feststation j übermittelt (620), die den Prozeß gestartet hat. Ebenso erhält die Kanalvergabe-Steuereinrichtung CAU von der Feststation j, die den Prozeß gestartet hat, die Meßergebnisse über die Verfügbarkeiten $q_{ji}$ des bisher benutzten Kanals i an der Basistation j vor der probeweisen Verwendung des Kanals i' und die Verfügbarkeit $q^*_{ji'}$ des probeweise benutzten Kanals i' nach dessen probeweiser Verwendung.

Verschlechtert sich die Qualität einer Funkverbindung durch die probeweise Verwendung des Funkkanals i' so stark, daß eine ungestörte Gesprächsverbindung auf dem probeweise verwendeten Funkkanal i' nicht möglich ist, so ist durch den im System vorgesehenen Wechsel des Funkkanals innerhalb der Zelle sichergestellt, daß das Gespräch aufrechterhalten bleibt.

Durch die probeweise Verwendung des Funkkanals können sich lokal unterschiedliche Funksituationen einstellen, welche gegenüber den bisherigen Funksituationen lokale Verbesserungen oder Verschlechterungen mit sich bringen können. Zur Abschätzung der lokalen Veränderungen der Funksituation an der betrachteten Feststation j und der ihr zugeordneten Nachbarstationen j' wird in der Kanalvergabe-Steuereinrichtung CAU die Summe $\Delta E$ über alle Änderungen der Verfügbarkeiten gebildet, die sich durch die probeweise Verwendung des Funkkanals i' anstelle des Funkkanals i an der betrachteten Feststation j und allen Nachbarstationen j' ergeben hat (610):

$$\Delta E = \sum_{j' \in S_j} \sum_{i'' \in K_{j'}} (q^*_{j'i''} - q_{j'i''}) + q^*_{ji'} - q_{ji}$$

Durch die Summe über alle Nachbarstationen j' erfaßt man automatisch die kumulativen Störungen. Je nach Wahl von i" werden lediglich Gleichkanalstörung (i"=i und i"=i') oder auch Nachbarkanalstörungen (i"= i - n,...i - 1, i, i + 1,...,i + n und i"= i'- n,...i'- 1, i',i'+ 1,...,i'+ n) erfaßt. Auch wenn zunächst die Anzahl der für i" zu betrachtenden Fälle sehr groß erscheint, so ist in der Realität durch die Bedingung, daß die berücksichtigten Kanäle i" auch in der Kanalliste $K_j$, der geweiligen Feststation j bzw. j' enthalten sein müssen, deren Anzahl erheblich reduziert. Für jeweils nicht in der Kanalliste $K_j$ enthaltene Kanäle ist es auch nicht erforderlich, deren Verfügbarkeit zu messen.

Eine positive Summe $\Delta E$ der Änderungen der Verfügbarkeiten bedeutet, daß die probeweise Verwendung des Kanals i' in der Gesamtbetrachtung aller Nachbarstationen j' zu einer Verbesserung der Funksituation geführt hat. Durch die Gesamtbetrachtung aller betreffenden Verfügbarkeiten kann es durchaus auch zu einer Änderung der Kanalliste kommen, obwohl die Verfügbarkeit eines Kanals i' sich an der Feststation ; verschlechtert hat, dann nämlich, wenn sich dafür die Verfügbarkeit dieses Kanals oder seiner Nachbarkanäle in den Nachbarstationen entsprechend verbessert hat.

Nach Ablauf der maximalen Meßzeit wird die durch die probeweise Verwendung eines bisher nicht nicht benutzten Funkkanals i' aufgetretenen Veränderungen der Verfügbarkeiten $\Delta E$ bewertet. Hat eine Verschlechterung stattgefunden, so wird die probeweise Verwendung des bisher nicht benutzten Funkkanals i' zurückgenommen. Diese Rücknahme wird auch den Nachbarstationen mitgeteilt, sodaß diese bei den alten Meßungen von $q_{j'i}$ und $q_{ji'}$ wieder aufsetzen können. Ist hingegen durch die probeweise Verwendung des bisher unbenutzten Funkkanals i' eine Verbesserung aufgetreten, so wird der bisher benutzte Funkkanal i in der Kanalliste durch den probeweise benutzten Funkkanal i' ersetzt.

Anschließend wird allen Nachbarstationen ein Signal geschickt, welches deren Blockierung aufhebt. Dadurch wird es diesen Nachbarstationen wieder gestattet, selbst einen Prozeß zur Änderung ihrer Kanalliste zu starten.

Bei der beschriebenen Ausführungsform der Erfindung werden die Änderungen der Kanallisten zunehmend abnehmen, bis ein stabiler Zustand erreicht ist. Es kann jedoch nicht ausgeschlossen werden, daß es sich bei diesem Zustand um ein Suboptimum handelt, zu welchem eine noch bessere Belegung der Kanallisten existiert. In einer Weiterbildung der Ausführungsform der Erfindung wird daher von Zeit zu Zeit auch eine Verschlechterung der Kanalliste erlaubt, um auf diese Weise die Möglichkeit zu eröffnen, aus einem Suboptimum herauszukommen. Um die Störungen im Funknetz durch die erlaubten Verschlechterungen nicht zu groß werden zu lassen, ist es von Vorteil, kleinere Verschlechterungen eher zuzulassen, als größere Verschlechterungen. Letztendlich müssen aber auch große Verschlechterungen noch zugelassen sein, um auch aus einem tiefen Suboptimum heraus zu kommen. Hierzu wird im Ausführungsbeispiel jede Verschlechterung der Summe der Verfügbarkeiten $\Delta E$ mit einem Faktor T gewichtet und mittels der Exponentialfunktion bewertet:

$$y = e^{\frac{-\Delta E}{T}}$$

Der bewertete Wert y wird mit einer im Intervall $0 \leq x \leq 1$ gleichverteilten Zufallszahl x verglichen. Nur wenn der Wert von y größer ist als die Zufallszahl x wird i' trotz Verschlechterung der Funksituation berücksichtigt. Durch geeignete Wahl des Gewichtungsfaktors T kann so die Häufigkeit mit der Änderung der Kanalliste bei Verschlechterungen der Funksituation zugelassen werden, eingestellt werden.

Mit der Anzahl bzw. der Dauer der Messungen steigt auch die Genauigkeit, mit der die Verfügbarkeit $q_{ji}$ geschützt wird. Um Fehlentscheidungen aufgrund ungesicherter statistischer Daten zu vermeiden, kann anhand der Länge der Meßzeit eine Abschätzung der Schwankungsbandbreite des Schätzwertes der Verfügbarkeit getroffen werden und eine obere und untere Schranke für die Verfügbarkeit geschätzt werden, innerhalb derer sich der wahre Wert der Verfügbarkeit mit hoher Wahrscheinlichkeit befindet. Wird zur Berechnung der $\Delta E$ jeweils der untere Schätzwert herangezogen, so ist man mit dieser Berechnung auf der sicheren Seite und vermeidet eine Änderung der Kanalliste durch statistisch ungesicherte Daten.

In einer Weiterbildung der Erfindung ist vorgesehen, den Gewichtungsfaktor zu ändern. Beginnend von einem maximalen Gewichtungsfaktor $T_{max}$ wird beispielsweise nach einer bestimmten Anzahl von Kanallistenänderung und/oder nach Ablauf einer bestimmten Zeitspanne der Gewichtungsfaktor T reduziert. Auf diese Weise sind zu Anfang Änderungen der Kanalliste durch Verschlechterungen relativ häufig erlaubt. Dies ist insbesondere äußerst sinnvoll bei Funknetzen, die neu in Betrieb gehen. Bei neu in Betrieb gehenden Funknetzen ist nämlich im allgemeinen das Verkehrsaufkommen relativ gering und das Funknetz noch nicht voll ausgelastet. Ein häufiges Ändern der Kanallisten kann von einem Funknetz, das neu in Betrieb genommen wird daher besonders leicht verkraftet werden. Mit wachsendem Verkehrsaufkommen und wachsendem Funknetz reduzieren sich automatisch auch die Anzahl der Kanallistenänderungen. Durch Vorgabe eines bestimmten Endwertes $T_{end}$ für den Gewichtungsfaktor T wird sichergestellt, daß ein Herausspringen aus einem Suboptimum prinzipiell möglich bleibt.

Unter der Voraussetzung daß die Randbedingungen konstant sind, wird auf diese Weise ein Optimum gefunden. Ein reales Funknetz ist jedoch ständig Veränderungen unterworfen. Es ändern sich beispielsweise durch Errichtung neuer Gebäude die Ausbreitungsbedingungen, neue Feststationen können hinzukommen. Als Antwort auf erhöhten Bedarf an einer Feststation werden neue Sende- und Empfangseinrichtungen installiert, die eine größere Anzahl von verfügbaren Funkkanälen erlauben. Würde man in solchen Fällen den gesamten Prozeß mit dem maximalen Gewichtungsfaktor $T_{max}$ neu starten, würde dies zunächst zu einer erheblichen Verschlechterung der Kapazität des Funksystems führen.

In einer weiteren Ausgestaltung der Erfindung ist vorgesehen, daß der an einer Feststation verwendete Gewichtungsfaktor T aus einem Anteil des bisherigen Gewichtungsfaktors dieser Feststation und einem Anteil aller benachbarten Feststationen gebildet wird. Es hat sich nämlich herausgestellt, daß eine einseitige Erhöhung eines Gewichtungsfaktors T an einer Feststation j zur Anpassung dieser Feststation an geänderte Bedingungen alleine nicht ausreichend ist, da Anpassungen der Nachbarstationen j', wenn deren Gewichtsfaktoren $T_j$ unverändert bleiben, nur in verhältnismäßig geringem Maße zugelassen werden. Durch einen, beispielsweise in regelmäßigen Zeitabständen vorgenommenen Abgleich der Gewichtungsfaktoren, wird um eine veränderte Funkumgebung herum die Bereitschaft zu Änderungen vorübergehend angehoben. Hierbei kann es unter Umständen vorteilhaft sein, den Gewichtungsfaktor $T_j$ einer Feststation, für die der Bedarf einer außerordentlichen Anpassung besteht für eine längere Zeitspanne auf den Maximalwert $T_{max}$ festzuhalten.

Ändert sich beispielsweise die Funksituation durch Zuschaltung einer neuen Feststation, so wird bei Inbetriebnahme der neuen Feststation deren Gewichtungsfaktor auf den Maximalwert $T_{max}$ gesetzt und gleichzeitig die neu in Betrieb genommene Feststation in den entsprechenden benachbarten Funkzellen in deren Nachbarstationenliste $S_j$ aufgenommen. Durch den Abgleich des Gewichtungsfaktors werden auf diese Weise bei Inbetriebnahme einer neuen Feststation die Gewichtungsfaktoren der benachbarten Feststationen vorübergehend erhöht, und somit eine erhöhte Bereitschaft zum Verlassen des bisher gefundenen Optimums provoziert.

Eine Änderung der Funksituation kann jedoch auch durch das Funksystem selbst festgestellt werden, indem beispielsweise die Schätzwerte für die Verügbarkeit $q_{ji}$ beobachtet werden. Ändert sich der Schätzwert der Verfügbarkeit $q_{ji}$, ohne daß in der Umgebung einer Feststation eine probeweise Änderung eines Funkkanals vorgenommen wurde, so weist dies auf eine Änderung der Funksituation hin. Hiermit kann insbesondere auf Änderungen der Funksituation reagiert werden, die nicht vom Netzbetreiber verursacht wurden, und sich somit seiner Kenntnis unmittelbar entziehen. Beispielsweise durch einen Neubau eines Hochhauses können völlig neue Interferenzsituationen entstehen, die Verschlechterungen aber auch Verbesserungen der Funksituation bedingen können.

Zur Berechnung eines neuen Gewichtungsfaktors $T^*_j$ an einer Feststation j ist in der Kanalvergabe-Steuereinrichtung CAU beispielsweise folgende Formel zur Verwendung vorgesehen:

$$T_j^* = pT_j + (1 - p) \; \frac{1}{|S_j|} \sum_{j' \in S_j} T_j'$$

Hierbei setzt sich ein neu berechneter Gewichtungsfaktor aus einem bestimmten Anteil p des bisherigen Gewichtungsfaktors $T_j$ und einem Anteil (1 - p) des Durchschnittswertes der Gewichtungsfaktoren seiner Nachbarstationen zusammen. Naturgemäß ist der Anteil von p zwischen 0 und 1 zu wählen. Je nachdem wie lange der Gewichtungsfaktor $T_j$ einer Feststation j, deren Funksituation sich geändert hat auf einen erhöhten Wert gehalten wird, desto mehr wirkt sich die Änderung dieses Gewichtungsfaktors im Gesamtnetz aus und ermöglicht so auch eine Anpassung des gesamten Funknetzes. Da die Ausbreitung der modifizierten Gewichtungsfaktoren T* jedoch langsam hochläuft, ist somit gewährleistet, daß die Änderung einer lokalen Änderung der Funksituation hauptsächlich lokal wirkt und den mehr oder minder stabilen Zustand des gesamten Funknetzes nicht schlagartig über den Haufen wirft.

In weiteren Ausgestaltungen der Erfindung sind mehrere verschiedene Kanallisten vorgesehen, die in Abhängigkeit von bestimmten Ereignissen ausgewählt werden. Beispielsweise durch Einbeziehung der Uhrzeit in die Auswahl einer Kanalliste kann der Prozeß zur Optimierung der Kanalliste zu verschiedenen Tageszeiten gestartet werde. Da auch der Verkehrsbedarf über den Tag schwankt, erhält man auf diese Weise dem tageszeitlichen Verkehrsbedarf angepaßte Kanallisten.

Unter Einbeziehung des Tagesdatums können so auch Anpassungen an bestimmte Jahreszeiten vorgesehen werden.

## Patentansprüche

1. Mobilfunksystem mit Feststationen (20), bei dem vorgesehen ist, die einer Feststation (20) zugewiesene Auswahl von Funkkanälen durch Auswertung von im Betriebszustand gewonnenen Meßdaten zu ändern,
   dadurch gekennzeichnet,
   daß vorgesehen ist, als Meßdaten die Qualität (Qij) von benutzten Funkkanälen zu messen und diese Meßdaten dem Belegungszustand von anderen Funkkanälen zuzuordnen.

2. Mobilfunksystem nach Anspruch 1,
   dadurch gekennzeichnet,
   daß, nachdem ein an einer Feststation (20) ein neuer Funkkanal (i') belegt wird, an den anderen Feststationen eine Abfrage vorgenommen wird, ob sich die Qualität (Qij) auf den Funkkanälen der anderen Feststationen geändert hat.

3. Mobilfunksystem nach Anspruch 1,
   dadurch gekennzeichnet,
   daß die Qualität eines Funkkanals (i) zu dem Zweck überwacht wird, daß bei Feststellung einer signifikanten Änderung der Qualität (Qij) eines Funkkanals, eine Abfrage der Funkkanalbelegung der anderen Feststationen vorgenommen wird.

4. Mobilfunksystem nach Anspruch 1, 2, oder 3,
   dadurch gekennzeichnet,
   daß vorgesehen ist, daß eine Feststation (j) anstelle eines ihrer zugeordneten Funkkanäle (i) einen ihr nicht zugeordneten Funkkanal (i') probeweise benutzt und die sich dadurch an dieser Feststation (j) und an benachbarten Feststationen (j') einstellenden Änderungen der Qualitäten ($\Delta E$) von Funkkanälen, (i, i") derart ausgewertet werden, daß bei einer Verbesserung der Qualitäten eine Änderung der Zuweisung auf den probeweise benutzten Funkkanal (i') vorgenommen wird.

5. Mobilfunksystem nach Anspruch 4,
   dadurch gekennzeichnet,
   daß in Fällen, in denen durch die probeweise Verwendung eines Funkkanals (i') eine Verschlechterung der ermittelten Qualitäten eintritt, in geringeren Maße trotzdem die Änderung der Zuweisung auf den probeweise benutzten Funkkanal (i') vorgesehen ist.

6. Mobilfunksystem nach Anspruch 7,

dadurch gekennzeichnet,
daß eine Gewichtung (T) der ermittelten Qualitäten derart vorgesehen ist, daß eine Änderung der Zuweisung eines probeweise benutzten Funkkanls (i') bei Verschlechterung der Qualitäten zunehmend unwahrscheinlicher wird.

7. Mobilfunksystem nach Anspruch 6,
dadurch gekennzeichnet,
daß ein Ausgleich der Gewichtungen (T) zwischen benachbarten Feststationen (j') vorgesehen ist.

8. Steuervorrichtung (21) für ein Mobilfunksystem, bei dem Mittel (211, 212, 213, 214) vorgesehen sind, mit denen

- Daten von Feststationen gesammelt und gespeichert werden
- ein Kanalvergabeplan erstellt werden kann
- und die neuen Kanalvergabepläne an Feststationen weitergeleitet werden können,

dadurch gekennzeichnet,
daß die Mittel zur Speicherung (214) dazu vorgesehen sind, gemessene Gesprächsqualitäten (Qij) je nach Belegungszustand anderer Funkkanäle in verschiedenen Speicherbereichen zu speichern.

9. Feststation für ein Mobilfunksystem mit einer Steuervorrichtung, bei der Mittel (211, 212, 213, 214) vorgesehen sind, mit denen

- Daten von Feststationen gesammelt und gespeichert werden
- ein Kanalvergabeplan erstellt werden kann
- und die neuen Kanalvergabepläne an andere Feststationen weitergeleitet werden können,

dadurch gekennzeichnet,
daß die Mittel zur Speicherung (214) dazu vorgesehen sind, gemessene Gesprächsqualitäten (Qij) je nach Belegungszustand anderer Funkkanäle in verschiedenen Speicherbereichen zu speichern.

## Claims

1. A mobile radio system with base transceiver stations (20) in which system a selection of radio channels allocated to a base transceiver station (20) can be changed by evaluating measured data collected during operation, characterized in that the quality (Qij) of radio channels used is measured providing measured data and in that these measured data are allocated to the state of occupancy of other radio channels.

2. A mobile radio system as claimed in Claim 1, characterized in that after a new radio channel (i') is occupied at a base transceiver station (20), an enquiry is made at the other base transceiver stations whether the quality (Qij) on the radio channels of the other base transceiver stations has changed.

3. A mobile radio system as claimed in Claim 1, characterized in that the quality of a radio channel (i) is monitored for the purpose of an enquiry being made into the radio channel occupancy of other base transceiver stations when there has been established that the quality (Qij) of a radio channel has changed significantly.

4. A mobile radio system as claimed in Claim 1, 2 or 3, characterized in that a base transceiver station (j), instead of using one of its allocated radio channels (i), uses by way of trial a radio channel (i') that is not allocated thereto and the consequent changes of the qualities ($\Delta E$) of radio channels (i, i") taking place at this base transceiver station (j) and at adjacent base transceiver stations (j') are evaluated so that, when the qualities improve, the radio channel (i') used by way of trial is substituted for the allocated channel.

5. A mobile radio system as claimed in Claim 4, characterized in that in cases where there is a degradation of the qualities found as a result of the trial use of a radio channel (i'), occasionally the change of allocation to the radio channel (i') used by way of trial is to be made nevertheless.

6. A mobile radio system as claimed in Claim 7, characterized in that the determined qualities are weighted (T) in such a way that a change of the allocation of a radio channel (i') used by way of trial is increasingly improbable when the qualities degrade.

7. A mobile radio system as claimed in Claim 6, characterized in that the weights (T) of the adjacent base transceiver stations (j') are made equal.

8. A controller (21) for a mobile radio system, comprising means (211, 212, 213, 214) by which

- data from base transceiver stations are collected and stored,
- a channel allocation program can be drawn up,
- and the new channel allocation programs can be transferred to base transceiver stations,

characterized in that the storage means (214) are provided for storing measured call qualities (Qij) in different memory areas for different states of occupancy.

9. A base transceiver station for a mobile radio system comprising a controller in which means (211, 212, 213, 214) are provided by which

- data from base transceiver stations are collected and stored,
- a channel allocation program can be drawn up,
- and the new channel allocation programs can be transferred to base transceiver stations,

characterized in that the storage means (214) are provided for storing measured call qualities (Qij) in different memory areas for different states of occupancy.

## Revendications

1. Système de radiotéléphonie mobile avec des stations fixes (20) qui prévoit de modifier la sélection de canaux radio affectée à une station fixe (20) par évaluation de données de mesure obtenues dans l'état de fonctionnement, caractérisé en ce qu'il est prévu de mesurer la qualité (Qij) des canaux radio utilisés comme données de mesure et d'affecter ces données de mesure à l'état d'affectation d'autres canaux radio.

2. Système de radiotéléphonie mobile selon la revendication 1, caractérisé en ce que lorsqu'un nouveau canal radio (i') est affecté à une station fixe (20), une consultation des autres stations fixes est effectuée pour déterminer si la qualité (Qij) sur les canaux radio des autres stations fixes a évolué.

3. Système de radiotéléphonie mobile selon la revendication 1, caractérisé en ce que la qualité d'un canal radio (i) est surveillée dans le but de procéder à une consultation de l'affectation des canaux radio des autres stations fixes lors de la constatation d'une modification significative de la qualité (Qij) d'un canal radio.

4. Système de radiotéléphonie mobile selon l'une des revendications 1, 2 ou 3, caractérisé en ce qu'il est prévu qu'une station fixe (j) utilise à titre d'essai, à la place de l'un des canaux radio (i) qui lui sont affectés, un canal radio (i') qui ne lui est pas affecté et les modifications de qualité (ΔE) des canaux radio (i, i") qui s'installent dès lors sur cette station fixe (j) et sur la station fixe voisine (j) sont évaluées de telle sorte qu'en cas d'amélioration des qualités, une modification de l'affectation au canal radio (i') utilisé à titre d'essai est effectuée.

5. Système de radiotéléphonie mobile selon la revendication 4, caractérisé en ce que, dans les cas où une dégradation des qualités déterminées se produit par l'utilisation à titre d'essai d'un canal radio (i'), la modification de l'affectation au canal radio (i') utilisé à titre d'essai est prévue dans une moindre mesure.

6. Système de radiotéléphonie mobile selon la revendication 7, caractérisé en ce qu'une pondération (T) des qualités déterminées est prévue de telle sorte qu'une modification de l'affectation d'un canal radio (i') utilisé à titre d'essai soit de plus en plus improbable en cas de dégradation des qualités.

7. Système de radiotéléphonie mobile selon la revendication 6, caractérisé en ce qu'une compensation des pondérations (T) est prévue entre les stations fixes voisines (j').

8. Dispositif de commande (21) pour un système de radiotéléphonie mobile dans lequel des moyens (211, 212, 213, 214) sont prévus pour permettre :

EP 0 585 994 B1

- de recueillir et d'enregistrer des données de stations fixes;
- d'établir un plan d'affectation des canaux;
- et de transmettre les nouveaux plans d'affectation des canaux aux stations fixes, <u>caractérisé en ce</u> que des moyens d'enregistrement (214) sont prévus pour pouvoir enregistrer les qualités de conversation mesurées (Qij) en fonction de l'état d'affectation d'autres canaux dans différentes zones de mémoire.

9. Station fixe pour un système de radiotéléphonie mobile avec un dispositif de commande dans lequel sont prévus des moyens (211, 212, 213, 214) avec lesquels

- des données de stations fixes sont recueillies et enregistrées,
- un plan d'affectation des canaux peut être établi
- et les nouveaux plans d'affectation des canaux peuvent être transmis aux autres stations fixes, <u>caractérisée en ce</u> que les moyens d'enregistrement (214) sont prévus pour enregistrer des qualités de conversation mesurées (Qij) en fonction de l'état d'affectation d'autres canaux radio et en différentes zones de mémoire.

14

FIG.1

FIG.2

FIG.3

```
┌─────────────────────────────────────────┐
│  ┌───────────────────────────────────┐   │
│  │      select used radio channel     │───┼── 41
│  └───────────────────────────────────┘   │
│                    │                       │
│  ┌───────────────────────────────────┐   │
│  │     measure call quality Q_ij       │───┼── 42
│  └───────────────────────────────────┘   │
│                    │                       │
│  ┌───────────────────────────────────┐   │
│  │  query other fixed stations j' which│───┼── 43
│  │  radio channels i' they use         │   │
│  └───────────────────────────────────┘   │
│                    │                       │
│  ┌───────────────────────────────────┐   │
│  │  store measured call quality Q_ij in│   │
│  │  accordance with state of occupancy │   │
│  │  of other radio channels i' at the  │───┼── 44
│  │  other fixed stations j'            │   │
│  └───────────────────────────────────┘   │
└─────────────────────────────────────────┘
```

# FIG.4

has the end of evaluation interval been reached and have all data arrived from fixed stations?

no

50

yes

determine traffic load ── 51

determine probability P(Q|S) of interference of radio channel i by other radio channels i' ── 52

compute new exclusion matrix from traffic load and probabilities (P(Q|S) ── 53

compute new channel allocation plan ── 54

transmit new channel allocation plan to connected fixed stations ── 55

FIG.5

FIG.6